# FASCICULE DE BREVET EUROPEEN

(11) **EP 2 469 793 B1**
(45) Date de publication et mention de la délivrance du brevet: **08.05.2013**
(21) Numéro de dépôt: 11193450.1
(22) Date de dépôt: 14.12.2011
(51) Int. Cl.: H04L 29/06

(54) **Dispositif de transmission de paquets de données, et procédé, programme d'ordinateur et moyens de stockage correspondants**
Vorrichtung zur Übertragung von Datenpaketen, und entsprechendes Verfahren, Softwareprodukt für Computer und entsprechende Speichermittel
Device for transmitting data packets and corresponding method, computer program and storage means

(30) Priorité: 21.12.2010 FR 1060948
(43) Date de publication de la demande: 27.06.2012
(73) Titulaire: Sagemcom Energy & Telecom SAS, 92500 Rueil-Malmaison (FR)
(72) Inventeur: Lhuillier, Pierre, 92500 RUEIL MALMAISON (FR); Chiollaz, Cyril, 92500 RUEIL MALMAISON (FR)
(74) Mandataire: Maillet, Alain

(56) Documents cités:
- EP-A2- 2 178 260
- WO-A1-2008/038931
- WO-A1-2009/004631
- US-B1- 7 420 992

## Description

La présente invention concerne la transmission de paquets qui comportent chacun au moins un entête. La présente invention concerne plus particulièrement la compression de données de cet entête ou de ces entêtes.

Dans un réseau de communication, certains chemins de transmission comportent des goulots d'étranglement qui limitent les capacités de transmission de données. Cela peut par exemple être le cas lorsque des liaisons hertziennes sont utilisées sur une partie de ces chemins : les débits alors atteints, qui dépendent principalement de la modulation utilisée et de la bande passante du canal, sont généralement bien inférieurs à ceux atteints avec les fibres optiques par exemple.

Dans un tel réseau de communication, les informations transportées comportent généralement de la redondance, notamment d'un paquet de données à un autre, et plus particulièrement au niveau des entêtes (*header* en anglais) de ces paquets.

Il est connu des solutions consistant à compresser des données contenues dans des paquets en fonction de leur redondance, et notamment des données contenues dans des champs d'entête. Un dispositif de transmission de paquets construit alors une table de transposition avec des valeurs redondantes de ces paquets, c'est-à-dire qui se répètent d'un paquet à un autre, et associe des valeurs de données compressées à chacune de ces valeurs redondantes. Les données compressées sont alors transmises à la place de ces données redondantes. Le dispositif récepteur utilise une table similaire pour remplacer, dans les paquets qu'il reçoit, les données compressées par les données redondantes correspondantes.

Cependant, les caractéristiques d'un flux de paquets de données peuvent changer dans le temps. Par exemple, pour certains flux dont des champs d'entête ont, sur une période donnée, des valeurs disparates, c'est-à-dire ne présentant pas ou présentant peu de redondance, la compression de l'état de la technique se révèle inefficace.

Le document de brevet WO 2008/038931 A1 divulgue un système de compression de données d'entête de paquet dans lequel, si une portion d'entête à compresser est identique dans des nouveaux paquets à émettre et dans des paquets précédemment transmis, le système effectue une compression de données, sinon il émet les paquets sans compression.

Le document de brevet US 7,420,992 A1 divulgue un mécanisme de compression de données dans un tunnel. En entrée du tunnel, les paquets de données sont compressés, soit par compression des paquets entiers, soit par compression de leurs entêtes et/ou de leurs données utiles.

Il est souhaitable de pallier ces différents inconvénients de l'état de la technique.

L'invention concerne un dispositif de transmission de paquets de données, chaque paquet comportant au moins un entête, chaque entête comportant au moins un champ de données, ledit dispositif comportant des moyens de compression de données. Le dispositif est tel qu'il comporte des moyens de sélection adaptés pour sélectionner tout ou partie d'au moins un champ, en fonction d'une information relative à au moins un desdits paquets, et lesdits moyens de compression sont adaptés pour compresser les données dudit ou desdits champ(s), ou partie(s) de champ, sélectionné(s). Ainsi, en adaptant dynamiquement la sélection du ou des champ(s), ou partie(s) de champ, pour le(s)quel(s) des données subissent un traitement de compression visant à réduire leur taille, il est possible de s'adapter au caractère variable du contenu de l'entête ou des entêtes de paquet. Le débit de données est alors amélioré, c'est-à-dire réduit sans pour autant engendrer de pertes de données. L'information relative à au moins un paquet peut être le résultat d'une analyse statistique du trafic de paquets reçu préalablement par le dispositif transmetteur 1.51 en vue de sa transmission par le dispositif transmetteur 1.51. Elle peut aussi être une information de type de paquet contenue dans le paquet reçu, et ainsi à transmettre, par le dispositif transmetteur 1.51.

Selon un mode de réalisation particulier, chaque paquet pouvant comporter une pluralité d'entêtes correspondant à des couches protocolaires respectives, lesdits moyens de sélection sont adaptés pour sélectionner, tout ou partie d'au moins un champ, parmi ladite pluralité d'entêtes. Ainsi, l'amélioration du débit des données est renforcée.

Selon un mode de réalisation particulier, les moyens de compression sont adaptés pour effectuer une compression sur la base d'au moins une table stockant des valeurs prédéterminées dudit ou desdits champ(s), ou partie(s) de champ, sélectionné(s). Ainsi, le débit de données est amélioré, en utilisant un mécanisme peu coûteux en ressources de traitement et à latence induite limitée.

Selon un mode de réalisation particulier, le dispositif de transmission comporte des moyens de mise à jour de ladite ou desdites table(s) en fonction d'un critère de redondance, parmi un ensemble de paquets, de valeurs contenues dans ledit ou lesdits champ(s), ou partie(s) de champ, sélectionné(s). Ainsi, l'amélioration du débit des données est renforcée, car une table, à ressources limitées, peut être utilisée pour les valeurs de champ(s), ou partie(s) de champ, à compresser qui sont les plus significatives en termes de gain en débit.

Selon un mode de réalisation particulier, le dispositif de transmission comporte des moyens de réinitialisation de ladite ou desdites table(s), mis en oeuvre sur expiration d'une temporisation ou sur détection d'une incohérence avec une version de ladite ou desdites table(s) stockée par un dispositif de réception auquel les paquets sont destinés. Ainsi, la robustesse de la compression est améliorée.

Selon un mode de réalisation particulier, le dispositif de transmission comporte des moyens d'ajout, pour chaque paquet, d'un entête indiquant si ledit paquet comporte des données compressées, et des moyens de suppression des données ayant fait l'objet d'une compression par lesdits moyens de compression, lesdits moyens de suppression étant activés pour chaque paquet dont l'entête ajouté indique qu'il comporte des données compressées. Ainsi, les données compressées et les données à l'origine de la compression ne sont pas transmises de manière conjointe, ce qui renforce l'amélioration du débit de données.

Selon un mode de réalisation particulier, les moyens de sélection comportent des moyens d'analyse statistique de la présence de valeurs de champs dans une pluralité de paquets préalablement transmis par ledit dispositif. Ainsi, grâce à ces statistiques, la sélection de champ(s) ou de partie(s) de champ est plus efficace, ce qui renforce l'amélioration du débit de données.

Selon un mode de réalisation particulier, les moyens d'analyse statistique comportent des moyens d'estimation d'un gain en débit pour chacune desdites valeurs de champs. Ainsi, il est possible de sélectionner le ou les champ(s) ou partie(s) de champ qui offre(nt) le meilleur gain en débit.

Selon un mode de réalisation particulier, le dispositif de transmission comporte une pluralité de blocs de compression, chaque bloc de compression étant adapté pour compresser les données de tout ou partie d'au moins un champ, et les blocs de compression sont mis en oeuvre en fonction des gains en bande passante estimés par lesdits moyens d'estimation. Ainsi, l'amélioration de débit peut être renforcée dans le cadre d'une mise en oeuvre matérielle, donc à ressources d'implémentation limitées. Ainsi, un compromis entre ressources d'implémentation et amélioration de débit peut être optimisé.

Selon un mode de réalisation particulier, le dispositif de transmission comporte une machine d'états, chaque état définissant un statut actif ou inactif de chaque bloc de compression et, pour chaque bloc de compression actif, le ou les champ(s) ou partie(s) de champ sur le(s)quel(s) s'applique ledit bloc de compression. Ainsi, un mécanisme simple et fiable de gestion de la compression peut être mis en oeuvre.

Selon un mode de réalisation particulier, le dispositif de transmission comporte des moyens de transmission de messages de synchronisation indiquant, à un dispositif de réception auquel les paquets sont destinés, un changement d'état de ladite machine d'états. Ainsi, un mécanisme simple et fiable de gestion de la synchronisation entre transmission et réception des paquets comportant des données compressées peut être mis en oeuvre.

Selon un mode de réalisation particulier, le dispositif de transmission comporte des moyens d'ajout d'entête de paquet comportant une indication représentative de l'état dans lequel se trouve ladite machine d'états ou dans lequel doit se trouver une machine d'états (8.2) correspondante d'un dispositif de réception auquel les paquets sont destinés. Ainsi, un mécanisme simple et fiable de gestion de la synchronisation entre transmission et réception des paquets comportant des données compressées peut être mis en oeuvre.

L'invention concerne également un procédé, mis en oeuvre par un dispositif de transmission de paquets de données, lesdits paquets comportant au moins un entête, chaque entête comportant au moins un champ de données, ledit dispositif comportant des moyens de compression de données. Le procédé est tel qu'il comporte des étapes de sélection de tout ou partie d'au moins un champ, en fonction d'une information relative à au moins un desdits paquets, et de compression, par lesdits moyens de compression, de données dudit ou desdits champ(s), ou partie(s) de champ, sélectionné(s).

L'invention concerne également un dispositif de réception de paquets de données, chaque paquet comportant au moins un entête, chaque entête comportant au moins un champ de données, ledit dispositif comportant des moyens de décompression de données. Le dispositif de réception est tel que lesdits moyens de décompression comportent une pluralité de blocs de décompression, chaque bloc de décompression étant adapté pour décompresser les données de tout ou partie d'au moins un champ, et ledit dispositif comporte une machine d'états, chaque état définissant un statut actif ou inactif de chaque bloc de décompression et, pour chaque bloc de décompression actif, le ou les champ(s) ou partie(s) de champ sur le(s)quel(s) s'applique ledit bloc de décompression, et ledit dispositif comporte des moyens de réception de messages de synchronisation indiquant un changement d'état à appliquer à ladite machine d'états.

L'invention concerne également un programme d'ordinateur, qui peut être stocké sur un support et/ou téléchargé d'un réseau de communication, afin d'être lu par un système informatique ou un processeur. Ce programme d'ordinateur comprend des instructions pour implémenter le procédé mentionné ci-dessus, lorsque ledit programme est exécuté par un système informatique ou un processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication dans lequel l'invention peut être mise en oeuvre ;
- la Fig. 2 illustre schématiquement un algorithme mis en en oeuvre par un dispositif de transmission de paquets de données du système de la Fig. 1 ;
- la Fig. 3 illustre schématiquement un algorithme mis en en oeuvre par un dispositif de réception de paquets de données du système de la Fig. 1 ;
- la Fig. 4 illustre schématiquement un mode de réalisation particulier de l'algorithme de la Fig. 2 ;
- la Fig. 5 illustre schématiquement une table de transposition, telle qu'utilisée par le dispositif de transmission et par le dispositif de réception, dans le mode de réalisation particulier de la Fig. 4 ;
- la Fig. 6 illustre schématiquement un dispositif de compression de données du dispositif de transmission, selon un mode de réalisation particulier ;
- la Fig. 7 illustre schématiquement un format de paquet de données transmis par le dispositif de transmission à destination du dispositif de réception, selon le mode de réalisation particulier de la Fig. 6 ;
- la Fig. 8 illustre schématiquement un dispositif de décompression de données du dispositif de réception, correspondant au mode de réalisation particulier de la Fig. 6.

De manière à permettre d'augmenter le débit de données lors de la transmission de paquets depuis un dispositif de transmission vers un dispositif de réception, il est proposé de sélectionner tout ou partie d'au moins un champ d'entête de ces paquets, et, pour au moins un paquet, de compresser les données contenues dans ce(s) champ(s) ou partie(s) de champ sélectionné(s). Chacun de ces paquets comporte en effet au moins un entête, chaque entête comporte des informations ajoutées par une couche protocolaire que le paquet traverse avant d'être effectivement transmis sur un support (*medium* en anglais). Tel est le cas par exemple d'un paquet généré par une couche de transport, par exemple de type protocole de contrôle de transmission TCP (*Transmission Control Protocol* en anglais) défini par les documents RFC 791 et 793, qui subit une encapsulation de type protocole internet IP (*Internet Protocol* en anglais), puis une encapsulation de type Ethernet conforme au standard IEEE 802.3. Ainsi, en adaptant dynamiquement la sélection du ou des champ(s), ou partie(s) de champ, pour le(s)quel(s) des données subissent un traitement de compression, il est possible de s'adapter au caractère variable du contenu de l'entête ou des entêtes de paquet.

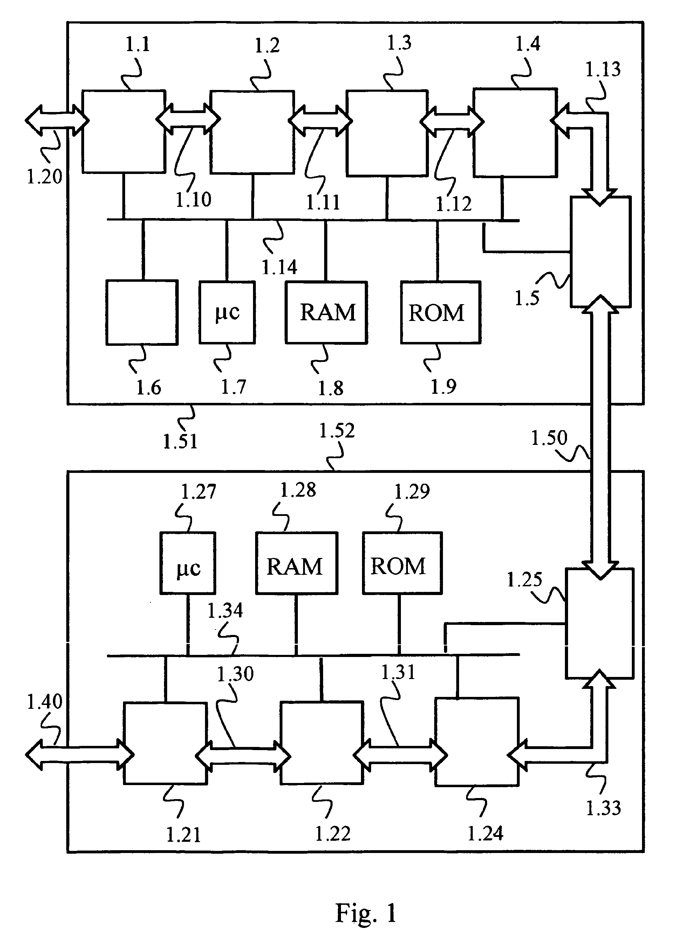

La Fig. 1 illustre schématiquement un système de communication dans lequel l'invention peut être mise en oeuvre. Le système de communication comprend un dispositif transmetteur 1.51 et un dispositif récepteur 1.52, interconnectés par un lien de communication 1.50 qui peut être filaire ou sans-fil. Le dispositif transmetteur 1.51 comprend, reliés par un bus de communication 1.14 : un processeur, micro-processeur, microcontrôleur (noté µc) ou CPU (*Central Processing Unit* en anglais ou *Unité Centrale de Traitement* en français) 1.7 ; une mémoire vive RAM (*Random Access Memory* en anglais ou *Mémoire à Accès Aléatoire* en français) 1.8 ; une mémoire morte ROM (*Read Only Memory* en anglais ou *Mémoire à Lecture Seule* en français) 1.9 ou de type mémoire flash ; un lecteur 1.6 de medium de stockage, tel qu'un lecteur de CD-ROM (pour *Compact Disk Read Only Memory* en anglais ou *Disque Compact Mémoire à Lecture Seule* en français) ; un dispositif source de paquets 1.1 ; un dispositif de compression de données 1.2 ; une mémoire tampon 1.3 ; un module d'encapsulation 1.4 ; et un module de transmission 1.5.

Le module de transmission 1.5 est interconnecté avec le module d'encapsulation 1.4 grâce à un lien 1.13. Le module d'encapsulation 1.4 est interconnecté avec la mémoire tampon 1.3 grâce à un lien 1.12. La mémoire tampon 1.3 est interconnectée avec le dispositif de compression de données 1.2 grâce à un lien 1.11. Le dispositif de compression de données 1.2 est interconnecté avec le dispositif source de paquets 1.1 1 grâce à un lien 1.10. Le dispositif source de paquets 1.1 est éventuellement interconnecté avec un ou plusieurs dispositif(s) de communication (non représenté(s)) grâce à un lien, un bus ou un réseau de communication 1.20.

Dans un mode de réalisation particulier, le dispositif source de paquets 1.1 est un dispositif d'interconnexion de sous-réseaux, tel qu'un pont (*bridge* en anglais) ou un commutateur (*switch* en anglais). Le dispositif source de paquets 1.1 est alors en charge de relayer, à destination du dispositif récepteur 1.52 ou de dispositifs de communication pour lesquels le dispositif récepteur 1.52 sert de relais, des paquets reçus via le lien 1.20.

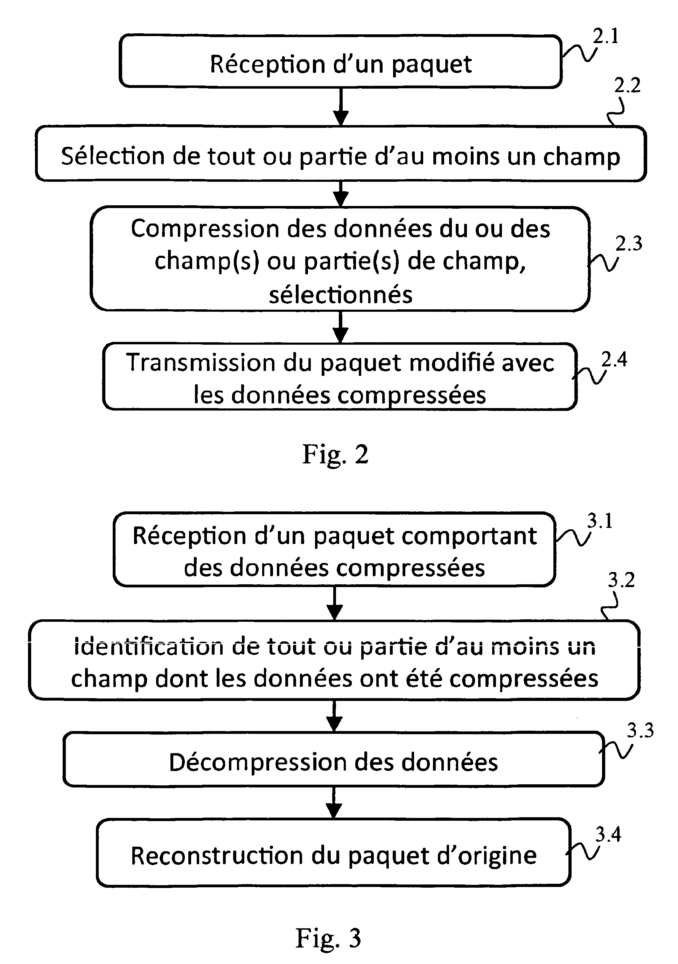

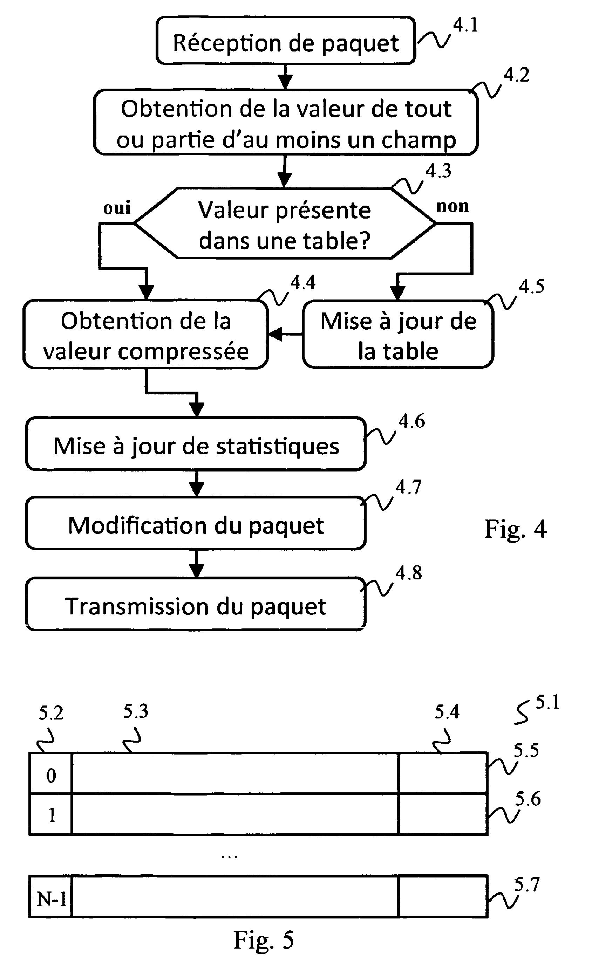

Le microcontrôleur 1.7 est capable d'exécuter des instructions chargées dans la RAM 1.8 à partir de la ROM 1.9, d'un support de stockage, tel qu'un disque dur ou un CD-ROM, ou d'un réseau de communication. Lorsque le dispositif transmetteur 1.51 est mis sous tension, le microcontrôleur 1.7 est capable de lire de la RAM 1.8 des instructions et de les exécuter. Ces instructions forment un programme d'ordinateur, qui cause la mise en oeuvre, par le microcontrôleur 1.7, de tout ou partie des algorithmes décrits ci-après en relation avec les Figs. 2 et 4.

Tout ou partie des algorithmes décrits ci-après en relation avec les Figs. 2 et 4 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur, ou être implémenté sous forme matérielle par une machine ou un composant dédié, tel qu'un FPGA (*Field-Programmable Gate Array* en anglais ou *Matrice de Portes Programmable sur Champ* en français) ou un ASIC (*Application-Specific Integrated Circuit* en anglais ou *Circuit Intégré Spécifique à une Application* en français).

Le dispositif source de paquets 1.1 fournit des paquets, par exemple de type Ethernet, au dispositif de compression de données 1.2 via le lien 1.10.

Dans un mode de réalisation particulier, le dispositif de compression de données 1.2 utilise le lien 1.10 pour contrôler le débit des paquets transmis par le dispositif source de paquets 1.1. Le dispositif source de paquets 1.1 comporte alors un module de contrôle du débit ou de la mise en forme des paquets (*rate controller* ou *shaping controller* en anglais) qui permet de configurer le débit des paquets en sortie du dispositif source de paquets 1.1.

Le dispositif de compression de données 1.2 applique un traitement sur les paquets reçus du dispositif source de paquets 1.1, qui permet de réduire le débit de données. Cette opération est détaillée ci-après en relation avec les Figs. 2, 4 et 6.

Le dispositif de compression de données 1.2 transmet alors les paquets à la mémoire tampon 1.3 via le lien 1.11, afin qu'ils y soient stockés. La mémoire tampon 1.3 est de type FIFO (*First-In First Out* en anglais ou *Premier Entré Premier Sorti* en français) et permet de stocker des paquets de données en vue de leur transmission sur le lien de communication 1.50. Le taux, ou le niveau, de remplissage de la mémoire tampon 1.3, peut être utilisé pour contrôler le débit des paquets transmis par le dispositif source de paquets 1.1, de sorte à prendre en compte le gain en débit apporté par le bloc de compression 1.2.

Le module d'encapsulation 1.4 met en forme les paquets stockés dans la mémoire tampon 1.3 en vue de leur transmission, par le module de transmission 1.5, sur le lien de communication 1.50. Le module d'encapsulation 1.4 récupère, ou lit, les paquets à partir de la mémoire tampon 1.3, à un rythme fonction des capacités de transmission sur le lien de communication 1.50. Lorsque de la bande passante est disponible sur le lien de communication 1.50, le module de transmission 1.5 informe le module d'encapsulation 1.4 qui récupère au moins un paquet et effectue une encapsulation du ou des paquet(s) récupéré(s). Cette encapsulation consiste à placer chaque paquet dans un conteneur destiné à faciliter, ou permettre, son transport sur le lien de communication 1.50. Par exemple, cette encapsulation consiste en l'adjonction d'un entête GFP (*Generic Framing Procedure* en anglais ou *Procédure de Construction Générique de Trame* en français). Cette encapsulation peut en outre consister en l'adjonction d'un champ FCS (*Frame Check Sequence* en anglais ou *Séquence de Vérification de Trame* en français) pour permettre au dispositif récepteur 1.52 de vérifier que le paquet considéré a été reçu sans erreur.

Le dispositif récepteur 1.52 comprend, reliés par un bus de communication 1.34 : un processeur, micro-processeur, microcontrôleur (noté µc) ou CPU (*Central Processing Unit* en anglais ou *Unité Centrale de Traitement* en français) 1.27 ; une mémoire vive RAM (*Random Access Memory* en anglais ou *Mémoire à Accès Aléatoire* en français) 1.28 ; une mémoire morte ROM (*Read Only Memory* en anglais ou *Mémoire à Lecture Seule* en français) 1.29 ou de type mémoire flash ; un dispositif destinataire de paquets 1.21 ; un dispositif de décompression de données 1.22 ; un module de dés-encapsulation 1.24 ; et un module de réception 1.25.

Le module de réception 1.25 est interconnecté avec le module de dés-encapsulation 1.24 grâce à un lien 1.33. Le module de dés-encapsulation 1.24 est interconnecté avec le dispositif de décompression de données 1.22 grâce à un lien 1.31. Le dispositif de décompression de données 1.22 est interconnecté avec le dispositif destinataire de paquets 1.21 grâce à un lien 1.30. Le dispositif destinataire de paquets 1.21 est éventuellement interconnecté avec un ou plusieurs dispositif(s) de communication (non représenté(s)) grâce à un lien, un bus ou un réseau de communication 1.40.

Le microcontrôleur 1.27 est capable d'exécuter des instructions chargées dans la RAM 1.28 à partir de la ROM 1.29. Lorsque le dispositif récepteur 1.52 est mis sous tension, le microcontrôleur 1.27 est capable de lire de la RAM 1.28 des instructions et de les exécuter. Ces instructions forment un programme d'ordinateur, qui cause la mise en oeuvre, par le microcontrôleur 1.27, de tout ou partie de l'algorithme décrit ci-après en relation avec la Fig. 3. Tout ou partie de l'algorithme décrit ci-après en relation avec la Fig. 3 peut être implémenté sous forme logicielle par exécution d'un ensemble d'instructions par une machine programmable, tel qu'un DSP ou un microcontrôleur, ou être implémenté sous forme matérielle par une machine ou un composant dédié, tel qu'un FPGA ou un ASIC.

Le module de réception 1.25 reçoit des paquets en provenance du dispositif transmetteur 1.51 via le lien de communication 1.50. Le module de réception 1.25 fournit alors ces paquets au module de dés-encapsulation 1.24 via le lien 1.33. Le module de dés-encapsulation 1.24 retire les données qui ont été ajoutées par le module d'encapsulation 1.4 du dispositif transmetteur 1.51. Ces données retirées peuvent faire l'objet d'un traitement par le module de dés-encapsulation 1.24 ou par le microcontrôleur 1.27, comme par exemple pour vérifier que le paquet considéré a été reçu sans erreur. Les paquets dé-encapsulés sont ensuite transmis par le module de dés-encapsulation 1.24 au dispositif de décompression de données 1.22 via le lien 1.31. Le dispositif de décompression de données 1.22 du dispositif récepteur 1.52 effectue alors l'opération inverse du traitement effectué par le dispositif de compression de données 1.2. Le dispositif de décompression de données 1.22 transmet alors les paquets traités au dispositif destinataire de paquets 1.21.

La Fig. 2 illustre schématiquement un algorithme mis en en oeuvre par le dispositif transmetteur 1.51, plus particulièrement par le dispositif de compression 1.2.

Dans une étape 2.1, le dispositif transmetteur 1.51 reçoit, via le lien 1.20, un paquet de données. Ce paquet de données comporte au moins un entête et préférentiellement une pluralité d'entêtes qui lui ont été ajoutés par les diverses couches protocolaires qu'il a traversées avant de parvenir au dispositif transmetteur 1.51. Chacune de ces couches protocolaires a donc ainsi ajouté au paquet des informations qui sont destinées à la couche protocolaire correspondante au sein d'un dispositif auquel le paquet est destiné.

Dans une étape 2.2 suivante, le dispositif transmetteur 1.51 sélectionne, parmi l'entête ou les entêtes du paquet, tout ou partie d'au moins un champ, en vue de la compression des données qu'il contient. Ces données peuvent ainsi correspondre à la totalité d'un champ, comme par exemple un champ destiné à indiquer une adresse IP au format IPv6, tel que décrit dans le document RFC 2460. Ces données peuvent aussi correspondre à une partie seulement d'un champ, comme par exemple une partie d'un champ destiné à indiquer une adresse IP au format IPv6. Ces données peuvent aussi correspondre à un ensemble de plusieurs champs, contigus ou disjoints, chacun de ces champs pouvant être considéré en totalité ou en partie. Le dispositif transmetteur 1.51 décide de la compression effective de ces données par exemple en fonction de leurs valeurs. Il peut pour ce faire utiliser une table, tel que détaillé ci-après en relation avec les Figs. 4 et 5. Il peut aussi décider de faire une compression systématique de ces données, par exemple en appliquant une fonction bijective de compression sans pertes.

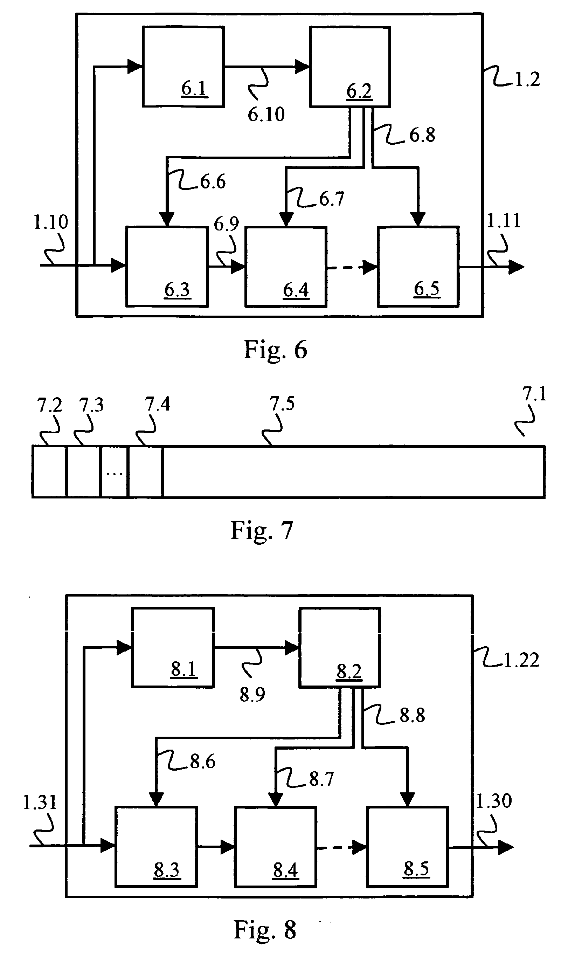

La sélection de tout ou partie d'au moins un champ est effectuée par le dispositif transmetteur 1.51 en fonction d'une information relative à au moins un paquet transmis ou à transmettre. Selon un premier mode de réalisation, décrit ci-après en relation avec la Fig. 6, cette information est le résultat d'une analyse statistique du trafic de paquets transmis préalablement par le dispositif transmetteur 1.51. Selon un second mode de réalisation, cette information est une information de type de paquet contenue dans le paquet à transmettre. La sélection s'effectue alors selon une règle préétablie. Par exemple, la règle peut consister à compresser des données de champs d'adresses IP source et destination en cas de paquet comportant un entête au format IPv6, et à compresser des données de champs d'adresses MAC (*Medium Access Control* en anglais ou *Contrôle d'Accès au Support* en français) source et destination dans le cas contraire. Ainsi, lorsque des ressources limitées, par exemple un unique bloc encodeur et un unique bloc décodeur comme décrit ci-après en relation avec les Figs. 6 et 8, il est possible d'optimiser le débit des données sur le lien 1.50 en partageant ces ressources selon la règle préétablie entre des compressions appliquées sur des champs, ou parties de champs, différents.

La récupération des données à partir du paquet reçu à l'étape 2.1 se fait par application d'un masque binaire sur l'entête ou les entêtes du paquet. Les bits du masque qui sont de même position que les bits du ou des champ(s), ou partie()s) de champ, sélectionné(s) sont alors mis à 1, les autres étant mis à 0. Un tel masque peut être défini par rapport à la position du premier bit du premier champ, ou partie de champ, concerné par la compression, selon un sens de lecture des données du paquet.

Dans une étape 2.3 suivante, le dispositif transmetteur 5.1 effectue la compression des données du ou des champ(s), ou partie(s) de champ, sélectionné(s) à l'étape 2.2. Dans une étape 2.4 suivante, le dispositif transmetteur 1.51 modifie le paquet de manière à inclure les données compressées obtenues à l'étape 2.3 et transmet le paquet ainsi modifié au dispositif récepteur 1.52. La modification du paquet peut consister à ajouter les données compressées au paquet lors d'une phase d'apprentissage destinée à permettre au dispositif récepteur 1.52 d'associer les données contenues à l'origine dans le paquet et celles obtenues après compression et, à ajouter les données compressées et supprimer les données d'origine lors d'une phase d'un phase subséquente de régime établi. Un entête de compression peut être ajouté de manière à indiquer, par exemple au moyen d'un bit dédié dans cet entête, si le paquet est concerné par une phase d'apprentissage ou s'il l'est par un régime établi.

Dans un premier mode de réalisation, tel que décrit ci-après en relation avec les Figs. 6 à 8, le dispositif transmetteur 1.51 indique au dispositif récepteur 1.52 tout champ, ou partie de champ, concerné par la compression. Cela peut être réalisé au moyen d'un message dédié.

Dans un second mode de réalisation, le dispositif transmetteur 1.51 et le dispositif récepteur 1.52 effectuent respectivement la sélection et l'identification de ces champs en suivant une règle préétablie, tel que mentionné ci-dessus. Le dispositif transmetteur 1.51 et le dispositif récepteur 1.52 peuvent notamment déterminer le type du paquet, puis déterminer tout champ, ou partie de champ, concerné en fonction de ce type.

Les étapes décrites en relation avec la Fig. 2 peuvent être mises en oeuvre par le biais d'une mise en cascade de plusieurs blocs de compression de sorte à apporter de la flexibilité à la compression de données. Un exemple de réalisation est présenté ci-après en relation avec la Fig. 6. Dans ce cas, un même nombre de blocs de décompression doit être mis en oeuvre par le dispositif récepteur 1.52, pour réaliser les opérations inverses de ces blocs de compression.

La Fig. 3 illustre schématiquement un algorithme mis en en oeuvre par le dispositif récepteur 1.52, plus particulièrement par le dispositif de décompression 1.22.

Dans une étape 3.1, le dispositif récepteur 1.52 reçoit un paquet via le lien 1.50. Dans une étape 3.2 suivante, le dispositif récepteur 1.52 identifie tout champ, ou partie de champ, dont les données ont fait l'objet d'une compression par le dispositif transmetteur 1.51. Dans un premier mode de réalisation, le dispositif récepteur 1.52 identifie que le paquet contient des données compressées grâce à une indication d'une telle compression insérée par le dispositif transmetteur 1.51 dans un champ dédié du paquet. Le dispositif transmetteur 1.51 peut alors utiliser pour ce faire un champ réservé, ou inutilisé, dans un entête déjà présent dans le paquet. Le dispositif transmetteur peut aussi ajouter au paquet un entête qui lui est propre. Dans un second mode de réalisation, le dispositif récepteur 1.52 identifie que le paquet contient des données compressées grâce à une incohérence entre un champ d'un entête du paquet qui est destiné à indiquer la longueur du paquet et la longueur effective du paquet.

Le dispositif récepteur 1.52 identifie ensuite tout champ, ou partie de champ, dont les données ont fait l'objet d'une compression effective par le dispositif transmetteur 1.51, comme déjà mentionné, soit grâce à une indication fournie par le dispositif transmetteur 1.51, soit par application d'une règle préétablie.

Dans une étape 3.3 suivante, le dispositif récepteur 1.52 décompresse les données compressées contenues dans le paquet, et obtient ainsi les données d'origine, en appliquant une opération inverse de celle appliquée par le dispositif transmetteur 1.51 à l'étape 2.3. Les données décompressées peuvent servir à obtenir les données d'origine afin de pouvoir les réinsérer, à la position appropriée, dans le paquet afin de reconstruire le paquet d'origine dans une étape 3.4. Les données décompressées peuvent aussi servir à construire, au sein du dispositif récepteur 1.52, une table de transposition permettant d'associer, lors de la phase d'apprentissage déjà mentionnée, des données d'origine et les données compressées résultant de l'étape 2.3. Dans ce cas, dans l'étape 3.4, le dispositif récepteur 1.52 reconstruit le paquet d'origine en supprimant les données compressées du paquet reçu à l'étape 3.1.

La Fig. 4 illustre schématiquement un mode de réalisation particulier de l'algorithme de la Fig. 2, et plus particulièrement du mécanisme de compression.

Dans une étape 4.1, le dispositif transmetteur 1.51 reçoit un paquet comportant au moins un entête dont des données peuvent faire l'objet d'une compression effective. Dans une étape 4.2 suivante, le dispositif transmetteur 1.51 obtient les données de tout ou partie d'au moins un champ sélectionné parmi cet entête ou ces entêtes, comme précédemment décrit en relation avec l'étape 2.2. Dans une étape 4.3 suivante, le dispositif transmetteur 1.51 vérifie si les données obtenues sont présentes dans une table, dite table de transposition, dont un exemple de format est décrit ci-après en relation avec la Fig. 5. Le dispositif récepteur 1.52 dispose d'une table de transposition selon substantiellement le même format. En cas de vérification positive à l'étape 4.3, une étape 4.4 est effectuée ; sinon, une étape 4.5 est effectuée.

Dans l'étape 4.4, le dispositif transmetteur 1.51 obtient, à partir de la table de transposition, les données compressées associées aux données obtenues à l'étape 4.2. Par exemple, les données compressées correspondent à l'index de la table de transposition auquel les données obtenues à l'étape 4.2 sont présentes. Une étape 4.6 est ensuite effectuée.

Dans l'étape 4.5, le dispositif transmetteur 1.51 effectue une mise à jour de la table de transposition en stockant les données obtenues à l'étape 4.2. Si la table de transposition est pleine, le dispositif transmetteur 1.51 peut recycler au moins une entrée de la table. Il peut par exemple supprimer l'entrée pour laquelle le nombre d'occurrences est le plus faible, c'est-à-dire l'entrée qui s'est retrouvée le moins souvent dans les entêtes des paquets reçus. Il peut, selon un autre exemple, supprimer l'entrée pour laquelle le temps écoulé depuis la dernière occurrence est le plus long. Ensuite, l'étape 4.4 est effectuée.

Dans l'étape 4.6, le dispositif transmetteur 1.51 effectue une mise à jour de statistiques. Cela correspond par exemple à la mise à jour d'un compteur du nombre d'occurrences, dans les champs sélectionnés des paquets reçus, de la valeur obtenue à l'étape 4.2 et/ou la mise à jour d'une information indiquant l'instant de la dernière occurrence de cette valeur. Dans un mode de réalisation préféré, comme décrit ci-après en relation avec la Fig. 5, ces statistiques sont stockées dans la table de transposition en correspondance avec les données obtenues à l'étape 4.2.

Dans une étape 4.7 suivante, le dispositif transmetteur 1.51 modifie le paquet. Dans un premier exemple de réalisation, il ajoute un entête qui identifie que le paquet contient des données compressées et ajoute ces données dans cet entête. La seule présence de ces données compressées dans cet entête, à la place d'une valeur par défaut transmise quand le paquet ne contient pas de données compressées, peut suffire à indiquer que le paquet contient de telles données. Si c'est la première occurrence de ces données dans les entêtes des paquets reçus, les données compressées, par exemple l'index correspondant dans la table de transposition, et les données d'origine sont contenues dans le paquet transmis par le dispositif transmetteur 1.51 lors d'une étape 4.8 suivante. Sinon, les données d'origine sont supprimées du paquet et le paquet est transmis sans ces données dans l'étape 4.8. Un entête de compression peut indiquer, par exemple au moyen d'un bit dédié dans cet entête, si le paquet est concerné par une phase d'apprentissage ou s'il l'est par un régime établi.

Dans un second exemple de réalisation, il ajoute un entête, dit entête de compression, ou modifie un champ existant, pour indiquer au dispositif récepteur 1.52 que des données sont compressées, et qu'elles sont, si ce n'est déjà fait, à stocker dans sa propre table de transposition. Dans la mesure où le dispositif récepteur construit sa table de transposition de la même manière que le dispositif transmetteur 1.51, et obtient les données compressées de la même manière, il n'est pas nécessaire que le dispositif transmetteur 1.51 transmette ces données compressées en correspondance, comme par exemple de manière conjointe, avec les données d'origine. Par exemple, il n'est pas nécessaire que le dispositif transmetteur 1.51 transmette l'index auquel il a stocké les données obtenues à l'étape 4.2 dans la table de transposition. Ainsi, on limite la perte en débit liée à la phase d'apprentissage, par rapport à un cas où les données compressées sont transmises, pendant cette phase d'apprentissage, en correspondance avec les données d'origine.

En régime établi, c'est-à-dire lorsque les tables de transposition des dispositifs transmetteur 1.51 et récepteur 1.52 sont en accord, le dispositif transmetteur 1.51 supprime du paquet les données obtenues à l'étape 4.2 et ajoute au paquet les données compressées correspondantes, comme par exemple l'index concerné dans leur tables de transposition.

Ainsi, lorsque le dispositif récepteur 1.52 reçoit un paquet via le lien 1.50, il détermine s'il comporte des données compressées. Si ces données compressées coïncident avec aucune entrée de sa table de transposition 5.1, il met à jour la table en conséquence. Soit il utilise les informations fournies par le dispositif transmetteur 1.51, tel que l'index de table, soit il applique le même mécanisme que celui appliqué par le dispositif transmetteur 1.52 à l'étape 4.5. Si les données compressées coïncident avec une entrée de sa table de transposition 5.1, il modifie le paquet pour insérer, à la position appropriée, les données d'origine du paquet, telles que contenues dans la table de transposition 5.1 en correspondance avec les données compressées. Ensuite, le dispositif récepteur 1.52 modifie le paquet de sorte à supprimer l'entête ajouté, par le dispositif transmetteur, lors de l'étape 4.7.

L'algorithme de la Fig. 4 peut ainsi être mis en oeuvre pour compresser tout champ, ou partie de champ, voire plusieurs champs ou parties de champ. Dans le cadre de l'invention, ces champs ou parties de champ sont sélectionnés comme détaillé en relation avec la Fig. 2. Le mécanisme de compression de l'algorithme de la Fig. 4 est toutefois applicable avec une configuration statique des champs à compresser.

La Fig. 5 illustre schématiquement une table de transposition 5.1, telle qu'elle peut être utilisée par les dispositifs transmetteur 1.51 et récepteur 1.52, dans le mode de réalisation particulier décrit ci-dessus en relation avec la Fig. 4.

La table de transposition 5.1 contient un nombre N prédéfini d'entrées 5.5, 5.6 et 5.7 représentées sous forme de lignes. La table de transposition n'étant pas de taille infinie, un mécanisme de recyclage des entrées peut être mis en oeuvre, comme déjà décrit en relation avec l'étape 4.5. Il est aussi possible de réinitialiser la table de transposition 5.1 selon une fréquence de rafraichissement donnée. Une telle réinitialisation doit être effectuée de manière substantiellement simultanée par les dispositifs transmetteur 1.51 et récepteur 1.52. Cette réinitialisation permet en outre de palier la persistance éventuelle d'incohérences entre les tables de transposition 5.1 des dispositifs transmetteur 1.51 et récepteur 1.52. Pour vérifier cette cohérence, le dispositif récepteur 1.52 peut aussi appliquer, à intervalles réguliers ou sur détection d'un événement particulier, une fonction de hachage (*hashing function* en anglais) sur sa table de transposition 5.1 et transmettre le résultat au dispositif transmetteur 1.51 qui est alors en charge de vérifier la cohérence du résultat avec sa propre table de transposition 5.1 et d'informer le dispositif récepteur 1.52 d'une éventuelle incohérence. Il est aussi possible d'inverser les rôles des dispositifs transmetteur 1.51 et récepteur 1.52 pour cette vérification. Sur détection d'une telle incohérence, les tables de transposition 5.1 sont réinitialisées.

Dans un mode de réalisation particulier, seule la table de transposition du dispositif transmetteur 1.51 est réinitialisée. Ceci s'applique dans le cas où le dispositif transmetteur 1.51 indique dans un entête de compression, qu'il ajoute aux paquets qu'il doit transmettre, au dispositif récepteur 1.52 si le paquet est concerné par une phase d'apprentissage ou par un régime établi, et où il communique l'index de table concerné dans cet entête de compression. Cela revient à indiquer si le paquet contient, ou pas, une nouvelle entrée dans la table de transposition. Cela a pour effet d'écraser les données de la table de transposition du dispositif récepteur 1.52. Ainsi, la cohérence entre les deux tables de transposition 5.1 est conservée en tout instant.

Dans un autre mode de réalisation particulier, le dispositif transmetteur 1.51 attend que le dispositif récepteur 1.52 mette fin à la phase d'apprentissage. Pendant cette phase d'apprentissage, le dispositif transmetteur 1.51 transmet en correspondance, pour chaque paquet contenant des données compressées, les données d'origine et les données compressées. En d'autres termes, il ne supprime pas les données d'origine tant qu'il ne reçoit pas une information d'acquittement de la part du dispositif récepteur 1.52. Sur réception de cette information d'acquittement, le dispositif transmetteur 1.51 passe en régime établi, et les données d'origine sont alors supprimées pour les paquets concernés suivants. Les tables de transposition des dispositifs transmetteur 1.51 et récepteur 1.52 sont ainsi synchronisées.

Chaque entrée 5.5, 5.6 et 5.7 de la table de transposition 5.1 est associée à un index 5.2. Chaque entrée 5.5, 5.6 et 5.7 comporte une première structure de données 5.3 adaptée pour stocker les données obtenues à l'étape 4.2. La taille de cette structure de données dépend de la taille des champs, ou de parties de champs, sur lesquels la compression est appliquée. Chaque entrée 5.5, 5.6 et 5.7 comporte une seconde structure de données 5.4 adaptée pour stocker les statistiques mentionnées précédemment en relation avec l'étape 4.6. La table de transposition 5.1 du dispositif récepteur 1.52 peut se passer de cette seconde structure de données 5.4, dans le cas où le dispositif transmetteur 1.51 l'informe de la correspondance entre index de table et données faisant l'objet d'une compression effective.

Chaque entrée 5.5, 5.6 et 5.7 de la table de transposition 5.1 peut, dans le cas où l'index 5.2 ne sert pas de données compressées, contenir une troisième structure de données adaptée pour les stocker.

La Fig. 6 illustre schématiquement le dispositif de compression de données 1.2, selon un mode de réalisation particulier.

Le dispositif de compression de données 1.2 comporte un nombre B prédéfini de blocs de compression 6.3, 6.4 et 6.5. L'ensemble des blocs de compression 6.3, 6.4 et 6.5 permet la mise en en oeuvre de l'algorithme précédemment décrit en relation avec la Fig. 2. Dans un mode de réalisation préféré, chaque bloc de compression 6.3, 6.4 et 6.5 met en oeuvre l'algorithme de la Fig. 4. Ainsi, à chaque bloc de compression 6.3, 6.4 et 6.5 est associée une table de transposition 5.1, telle que précédemment décrite en relation avec la Fig. 5.

Chaque bloc de compression 6.3, 6.4 et 6.5 est alors en charge d'appliquer un masque prédéterminé sur les paquets reçus et pour lesquels une compression de données est à appliquer. Les blocs de compression 6.3, 6.4 et 6.5 sont alors en charge de compresser des données présentes dans tout ou partie d'au moins un champ respectif.

Le bloc de compression 6.3 reçoit des paquets via le lien 1.10, et compresse s'il est actif et s'il y a lieu, en fonction du contenu de sa table de transposition 5.1, des données parmi les entêtes de chaque paquet reçu. Il ajoute un entête correspondant à l'opération qu'il a effectuée, comme déjà décrit en relation avec l'étape 4.7, et transmet le paquet ainsi modifié au bloc de compression 6.4 via un lien 6.9. L'opération se répète ainsi pour chacun des autres blocs de compression 6.4 et 6.5, et le paquet modifié par chacun de ces blocs de compression 6.3, 6.4 et 6.5 est transmis via le lien 1.11. Si un bloc de compression 6.3, 6.4 ou 6.5 est inactif, comme décrit ci-après, il n'effectue aucune opération sur les paquets. Il est alors passif au regard de la transmission de ces paquets.

Par exemple, avec des paquets au format IPv6 sur Ethernet avec un champ TAG VLAN tel que défini par le standard IEEE 802.1Q, trois blocs de compression sont placés en cascade (*daisy-chained* en anglais). Un premier bloc de compression est en charge de compresser les champs d'adresse IP source et destination, un second bloc de compression est en charge de compresser le champ TAG VLAN, et un troisième bloc de compression est en charge de compresser les adresses MAC source et destination. Le taux de compression sur des trames Ethernet de 64 octets peut atteindre alors 70.3%.

Le format des paquets ainsi transmis par le dispositif de compression de données 1.2 est illustré par la Fig. 7. Chaque paquet 7.1 comporte une portion 7.5 qui comporte le paquet tel que reçu via le lien 1.10, éventuellement modifié de sorte que des données de champ d'entête ont été supprimées suite à la compression effectuée par les blocs de compression 6.3, 6.4 et 6.5. Chaque bloc de compression 6.3, 6.4 et 6.5 qui est actif a ajouté un entête de compression respectif 7.2, 7.3 et 7.4, chacun y indiquant si le paquet est concerné par une phase d'apprentissage ou un régime établi et, selon le cas, y insérant les données compressées.

Les caractéristiques du trafic étant fortement susceptibles de changer au cours du temps, le gain en débit obtenu par la compression des données peut ne pas compenser le sur-débit (*overhead* en anglais) introduit pour transmettre des informations concernant cette compression, s'il n'est pas opéré de sélection du ou des champ(s), ou partie(s) de champ, à compresser. Par exemple, il peut être préférable pendant une période donnée de faire de la compression sur tout ou partie des champs d'adresses MAC uniquement, de la compression sur les champs d'adresses IP étant défavorables car trop souvent différentes d'un paquet à l'autre, puis pendant une autre période de faire de la compression sur tout ou partie des champs adresses MAC et d'adresses IP, voire de ne pas faire de compression du tout. Une configuration statique de chaque bloc de compression ne permet pas de garantir l'efficacité de la compression, ni un gain en débit dans tous les cas : elle peut s'avérer bénéfique pendant certaines périodes, mais pourra s'avérer moins bénéfique voire néfaste pendant d'autres périodes.

Chaque bloc de compression 6.3, 6.4 et 6.5 peut alors être configuré pour être soit actif, soit inactif, et lorsqu'il est actif, être reconfiguré pour compresser d'autres champs ou parties de champs. La configuration des blocs de compression 6.3, 6.4 et 6.5 s'effectue respectivement via des liens 6.6, 6.7 et 6.8. Une machine d'états 6.2 définit les configurations à appliquer aux blocs de compression 6.3, 6.4 et 6.5. Chaque état de la machine d'état définit une combinaison entre statut actif ou inactif de chaque bloc de compression 6.3, 6.4 et 6.5, ainsi que, pour chaque bloc actif, chaque champ, ou partie de champ, sur lequel le bloc peut effectuer une compression.

A titre d'exemple, si le dispositif de compression 1.2 comporte deux blocs de compression X et Y, il est possible de définir les dix-huit états suivants pour la machine d'états 6.2 :

| | |
|---|---|
| Etat 0 : X inactif ; Y inactif | Etat 1 : X inactif ; Y @MACsrc |
| Etat 2 : X inactif ; Y @MACdst | Etat 3 : X inactif ; Y @MACsrc+dst |
| Etat 4 : X @Ilsrc ; Y inactif | Etat 5 : X @IPsrc ; Y @MACsrc |
| Etat 6 : X @IPsrc ; Y @MACdst | Etat 7 : X @IPsrc ; Y @MACsrc+dst |
| Etat 8 : X @IPdst ; Y inactif | Etat 9 : X @IPdst ; Y @MACsrc |
| Etat 10 : X @IPdst ; Y @MACdst | Etat 11 : X @IPdst ; Y @MACsrc+dst |
| Etat 12 : X @IPsrc+dst ; Y inactif | Etat 13 : X @IPsrc+dst ; Y @MACsrc |
| Etat 14 : X @IPsrc+dst ; Y @MACdst | |
| Etat 15 : X @IPsrc+dst ; Y @MACsrc+dst | |
| Etat 16 : X @IPsrc ; Y @IPdst | Etat 17 : X @MACsrc ; Y @MACdst |

où @MACsrc indique que le bloc X ou Y associé peut compresser des données du champ d'adresse MAC source de l'entête Ethernet, @MACdst indique que le bloc X ou Y associé peut compresser des données du champ d'adresse MAC destination de l'entête Ethernet, @MACsrc+dst indique que le bloc X ou Y associé peut compresser des données de la combinaison des champs d'adresse MAC source et destination de l'entête Ethernet, @IPsrc indique que le bloc X ou Y associé peut compresser des données du champ d'adresse II' source de l'entête II', @IPdst indique que le bloc X ou Y associé peut compresser des données du champ d'adresse IP destination de l'entête IP, et @IPsrc+dst indique que le bloc X ou Y associé peut compresser des données de la combinaison des champs d'adresse IP source et destination de l'entête IP.

D'autres états peuvent être définis sur la base de tout ou partie de ces champs ou d'autres champs.

Un module de décision 6.1 reçoit le trafic, c'est-à-dire les paquets, reçu via le lien 1.10. Il effectue des statistiques sur ce trafic de manière à déterminer l'état approprié de la machine d'états 6.2 pour améliorer le débit de données. Ces statistiques constituent une information relative au trafic, sur la base de laquelle le dispositif transmetteur 1.51 sélectionne le ou les champ(s), ou partie(s) de champ, susceptible(s) de compression. Il transmet, à la machine d'états 6.2 via un lien 6.10, une information représentative de cet état approprié.

Le module de décision 6.1 construit une table pour chaque champ ou partie de champ qui peut faire l'objet d'un état, pour au moins un bloc de compression, dans la machine d'états 6.2. En reprenant l'exemple ci-dessus, le module de décision 6.1 construit au moins les tables suivantes : une table pour effectuer des statistiques sur le champ d'adresse MAC source, une sur le champ d'adresse MAC destination, une sur la combinaison de ces deux champs d'adresse MAC, une sur le champ d'adresse IP source, une sur le champ d'adresse IP destination, une sur la combinaison de ces deux champs d'adresse IP. Dans un mode de réalisation préféré, chacune de ces tables est selon le format de table de transposition 5.1 décrit précédemment en relation avec la Fig. 5.

Le module de décision 6.1 recueille ainsi des statistiques sur les occurrences de chacune des entrées de ces tables de manière à estimer le gain en débit que chacune de ces tables peut apporter vis-à-vis du trafic en cours. En d'autres termes, les blocs de compression 6.3, 6.4 et 6.5 sont mis en oeuvre en fonction des gains en débit estimés par le module de décision.

Dans une variante de réalisation, le module de décision 6.1 peut ne construire qu'une table. Il recueille alors les statistiques relatives à tout ou partie d'au moins un champ, qui peut être pris en charge par un bloc de compression, et ce pendant une période donnée, par exemple correspondant à un nombre prédéterminé de paquets, suffisamment grand pour que les statistiques puissent converger vers des valeurs significatives et représentatives du trafic, mais suffisamment faible pour permettre de s'adapter rapidement aux évolutions du trafic. Par exemple, les statistiques peuvent être ainsi recueillies sur quelques milliers ou dizaines de milliers de paquets. Puis, le module de décision 6.1 stocke le résultat et recueille des statistiques relatives à tout ou partie d'au moins un autre champ.

Au vu de ces statistiques recueillies, le module de décision 6.1 est en mesure d'estimer le gain en débit qui aurait été obtenu si chacune de ces compressions avait été réellement appliquée. Il est alors en mesure de décider quel état apporte le gain en débit souhaité, tel que le meilleur gain parmi ceux déterminés, et en informer la machine d'état 6.2 pour qu'elle configure les blocs de compression 6.3, 6.4 et 6.5 en conséquence. Ensuite, le module de décision 6.1 peut effectuer une nouvelle phase d'analyse statistique du trafic.

Le dispositif de compression de données 1.2 doit informer le dispositif de décompression de données 1.22 de chaque changement d'état, à moins que le dispositif de décompression puisse de lui-même obtenir le même résultat quant à l'état sélectionné. Pour informer le dispositif de décompression de données 1.22 de chaque changement d'état, le dispositif de compression de données 1.2 transmet un paquet de synchronisation. Le paquet de synchronisation contient les informations d'état nécessaires à ce que le dispositif de décompression puisse effectuer les étapes inverses de celles mises en oeuvre par les blocs de compression 6.3, 6.4 et 6.5. Par exemple, le paquet de synchronisation contient un identifiant d'état de la machine d'états 6.2 et qui correspond à un état qui doit être appliqué par une machine d'état 8.2, décrite ci-après en relation avec la Fig. 8, au sein du dispositif de décompression de données 1.22. Le paquet de synchronisation indique alors une transition entre un état précédent et un état suivant. Ainsi, tous les paquets à compresser qui le précèdent sont compressés selon l'état précédant ; tous les paquets à compresser qui lui succèdent le sont selon l'état suivant. Il en va de même du côté du dispositif de décompression de données 1.22 : tous les paquets à décompresser qui précèdent le paquet de synchronisation le sont selon l'état précédant ; tous les paquets à décompresser qui lui succèdent le sont selon l'état suivant. La transmission et la réception d'un paquet de synchronisation entraînent respectivement la réinitialisation des tables de transposition des blocs de compression et de décompression. Dans un mode de réalisation particulier, comme déjà mentionné, seules les tables de transposition du côté des blocs de compression peuvent être réinitialisées.

Dans un mode de réalisation, particulier, de manière prendre en compte d'éventuels pertes de paquet de synchronisation, un paquet peut être transmis de manière périodique par le dispositif transmetteur 1.51, afin de permettre au dispositif récepteur 1.52 de vérifier la synchronisation des machines d'états 6.2 et 8.2. Un tel paquet contient alors une information relative à l'état dans lequel la machine d'états 8.2 doit se trouver au vu de l'état dans lequel se trouve la machine d'états 6.2. En cas d'incohérence détectée, le dispositif récepteur 1.52 met à jour la machine d'états 8.2 en fonction du contenu de ce paquet.

Dans un autre mode de réalisation particulier, une indication de l'état dans lequel la machine d'états 8.2 doit se trouver au vu de l'état dans lequel se trouve la machine d'états 6.2 est transmise dans un entête de compression ajouté par le dispositif de compression de données 1.2 à des paquets transmis par le dispositif transmetteur 1.51. Dans un mode de réalisation particulier, cette indication est ajoutée à chaque paquet.

La Fig. 8 illustre schématiquement le dispositif de décompression de données 1.22, correspondant au mode de réalisation particulier du dispositif de compression de données 1.2 décrit en relation avec la Fig. 6.

Le dispositif de décompression de données 1.22 comporte des blocs de décompression 8.3, 8.4 et 8.5 qui sont en charge d'effectuer les opérations inverses de celles effectuées par les blocs de compression 6.3, 6.4 et 6.5. Ces blocs de décompression 8.3, 8.4 et 8.5 sont alors au même nombre B que les blocs de compression 6.3, 6.4 et 6.5. Les blocs de décompression 8.3, 8.4 et 8.5 sont placés en cascade, par exemple dans le même ordre, ou dans l'ordre inverse, que les blocs de compression 6.3, 6.4 et 6.5 par rapport au sens de transit des paquets.

Le dispositif de décompression de données 1.22 comporte en outre une machine d'états 8.2 similaire à la machine d'états 6.2 et qui contrôle la configuration des blocs de décompression 8.3, 8.4 et 8.5, respectivement via des liens 8.6, 8.7 et 8.8. La machine d'états 8.2 définit les configurations à appliquer aux blocs de décompression 8.3, 8.4 et 8.5. Chaque état de la machine d'état définit une combinaison entre statut actif ou inactif de chaque bloc de décompression 8.3, 8.4 et 8.5, ainsi que, pour chaque bloc actif, chaque champ, ou partie de champ, sur lequel le bloc peut effectuer une décompression. Les machines d'états 6.2 et 8.2 sont synchronisées à l'aide de paquets de synchronisation, comme déjà mentionné en relation avec la Fig. 6. Ces paquets de synchronisation sont reçus via le lien 1.31 par un module de décision 8.1, et ne sont pas fournis aux blocs de décompression 8.3, 8.4 et 8.5. Le module de décision 8.1 interprète le contenu des paquets de synchronisation et configure la machine d'états 8.2 en conséquence, via un lien 8.9.

## Revendications

1. Dispositif (1.51) de transmission de paquets de données, chaque paquet comportant au moins un entête, chaque entête comportant au moins un champ de données, ledit dispositif comportant des moyens de compression (1.2; 6.3;6.4;6.5) de données et des moyens de sélection (6.1) adaptés pour sélectionner tout ou partie d'au moins un champ, en fonction d'une information relative à au moins un desdits paquets, lesdits moyens de compression étant adaptés pour compresser les données dudit ou desdits champ(s), ou partie(s) de champ, sélectionné(s), les moyens de sélection comportant des moyens d'analyse statistique de la présence de valeurs de champs dans une pluralité de paquets préalablement transmis par ledit dispositif,
**caractérisé en ce que** les moyens d'analyse statistique comportent des moyens d'estimation d'un gain en débit pour chacune desdites valeurs de champs,
et **en ce qu'**il comporte une pluralité de blocs de compression (6.3;6.4;6.5), chaque bloc de compression étant adapté pour compresser les données de tout ou partie d'au moins un champ, et **en ce que** les blocs de compression sont mis en oeuvre en fonction des gains en bande passante estimés par lesdits moyens d'estimation.

2. Dispositif de transmission selon la revendication 1, **caractérisé en ce que**, chaque paquet pouvant comporter une pluralité d'entêtes correspondant à des couches protocolaires respectives, lesdits moyens de sélection sont adaptés pour sélectionner, tout ou partie d'au moins un champ, parmi ladite pluralité d'entêtes.

3. Dispositif de transmission selon l'une quelconque des revendications 1 et 2, **caractérisé en ce que** les moyens de compression sont adaptés pour effectuer une compression sur la base d'au moins une table (5.1) stockant des valeurs prédéterminées dudit ou desdits champ(s), ou partie(s) de champ, sélectionné(s).

4. Dispositif de transmission selon la revendication 3, **caractérisé en ce qu'**il comporte des moyens de mise à jour de ladite ou desdites table(s) en fonction d'un critère de redondance, parmi un ensemble de paquets, de valeurs contenues dans ledit ou lesdits champs, ou partie(s) de champ, sélectionné(s).

5. Dispositif de transmission selon la revendication 4, **caractérisé en ce qu'**il comporte des moyens de réinitialisation de ladite ou desdites table(s), mis en oeuvre sur expiration d'une temporisation ou sur détection d'une incohérence avec une version de ladite ou desdites table(s) stockée(s) par un dispositif de réception (1.52) auquel les paquets sont destinés.

6. Dispositif de transmission selon l'une quelconque des revendications 1 à 5, **caractérisé en ce qu'**il comporte des moyens d'ajout, pour chaque paquet, d'un entête indiquant si ledit paquet comporte des données compressées, et des moyens de suppression des données ayant fait l'objet d'une compression par lesdits moyens de compression, lesdits moyens de suppression étant activés pour chaque paquet dont l'entête ajouté indique qu'il comporte des données compressées.

7. Dispositif de transmission selon l'une quelconque des revendications 1 à 6, **caractérisé en ce qu'**il comporte une machine d'états (6.2), chaque état définissant un statut actif ou inactif de chaque bloc de compression et, pour chaque bloc de compression actif, le ou les champ(s) ou partie(s) de champ sur le(s)quel(s) s'applique ledit bloc de compression.

8. Dispositif de transmission selon la revendication 7, **caractérisé en ce qu'**il comporte des moyens de transmission de messages de synchronisation (7.1) indiquant, à un dispositif de réception (1.52) auquel les paquets sont destinés, un changement d'état de ladite machine d'états.

9. Dispositif de transmission selon la revendication 7, **caractérisé en ce qu'**il comporte des moyens d'ajout d'entête de paquet comportant une indication représentative de l'état dans lequel se trouve ladite machine d'états ou dans lequel doit se trouver une machine d'états (8.2) correspondante d'un dispositif de réception (1.52) auquel les paquets sont destinés.

10. Procédé, mis en oeuvre par un dispositif (1.51) de transmission de paquets de données, lesdits paquets comportant au moins un entête, chaque entête comportant au moins un champ de données, ledit dispositif comportant des moyens de compression (1.2; 6.3;6.4;6.5) de données, le procédé comportant des étapes de sélection (2.2) de tout ou partie d'au moins un champ, en fonction d'une information relative à au moins un desdits paquets, et de compression (2.3), par lesdits moyens de compression, de données dudit ou desdits champ(s), ou partie(s) de champ, sélectionné(s), l'étape de sélection comportant une étape d'analyse statistique de la présence de valeurs de champs dans une pluralité de paquets préalablement transmis par ledit dispositif,
**caractérisé en ce que** l'étape d'analyse statistique comporte une étape d'estimation d'un gain en débit pour chacune desdites valeurs de champs,
et **en ce qu'**il comporte une étape de configuration d'une pluralité de blocs de compression (6.3;6.4;6.5), chaque bloc de compression étant adapté pour compresser les données de tout ou partie d'au moins un champ, et une étape d'activation des blocs de compression en fonction des gains en bande passante estimés.

11. Moyens de stockage, **caractérisé en ce qu'**ils stockent un programme d'ordinateur comprenant des instructions pour mettre en oeuvre, par un dispositif de transmission de paquets de données, le procédé selon la revendication 10, lorsque ledit programme est exécuté par un processeur du dispositif de transmission de paquets de données.

12. Programme d'ordinateur comprenant des instructions pour mettre en oeuvre, par un dispositif de transmission de paquets de données, le procédé selon la revendication 10, lorsque ledit programme est exécuté par un processeur du dispositif de transmission de paquets de données.

13. Dispositif (1.52) de réception de paquets de données, chaque paquet comportant au moins un entête, chaque entête comportant au moins un champ de données, ledit dispositif comportant des moyens de décompression (1.22) de données, **caractérisé en ce que** lesdits moyens de décompression comportent une pluralité de blocs de décompression (8.3;8.4;8.5), chaque bloc de décompression étant adapté pour décompresser les données de tout ou partie d'au moins un champ, **en ce que** ledit dispositif comporte une machine d'états (8.2), chaque état définissant un statut actif ou inactif de chaque bloc de décompression et, pour chaque bloc de décompression actif, le ou les champ(s) ou partie(s) de champ sur le(s)quel(s) s'applique ledit bloc de décompression, et **en ce que** ledit dispositif comporte des moyens (8.1) de réception de messages de synchronisation indiquant un changement d'état à appliquer à ladite machine d'états.

## Patentansprüche

1. Vorrichtung (1.51) zur Übertragung von Datenpaketen, wobei jedes Paket mindestens eine Kopfzeile aufweist, wobei jede Kopfzeile mindestens ein Datenfeld aufweist, wobei die Vorrichtung Komprimierungseinrichtungen (1.2; 6.3; 6.4; 6.5) von Daten und Auswahleinrichtungen (6.1) aufweist, die geeignet sind, um abhängig von einer Information bezüglich mindestens eines der Pakete ein ganzes oder einen Teil mindestens eines Felds auszuwählen, wobei die Komprimierungseinrichtungen geeignet sind, um die Daten des ausgewählten Felds oder Feldteils oder der ausgewählten Felder oder Feldteile zu komprimieren, wobei die Auswahleinrichtungen statistische Analyseeinrichtungen des Vorhandenseins von Feldwerten in einer Vielzahl von Paketen aufweisen, die vorher von der Vorrichtung übertragen wurden,
**dadurch gekennzeichnet, dass** die statistischen Analyseeinrichtungen Einrichtungen zur Schätzung einer Übertragungsratenverstärkung für jeden der Feldwerte aufweisen,
und dass sie eine Vielzahl von Komprimierungsblöcken (6.3; 6.4; 6.5) aufweist, wobei jeder Komprimierungsblock geeignet ist, um die Daten von einem ganzen oder einem Teil mindestens eines Felds zu komprimieren, und dass die Komprimierungsblöcke abhängig von den Bandbreitenverstärkungen angewendet werden, die von den Schätzeinrichtungen geschätzt werden.

2. Übertragungsvorrichtung nach Anspruch 1, **dadurch gekennzeichnet, dass**, da jedes Paket eine Vielzahl von Kopfzeilen aufweisen kann, die jeweiligen Protokollschichten entsprechen, die Auswahleinrichtungen geeignet sind, um aus der Vielzahl von Kopfzeilen ein ganzes oder einen Teil mindestens eines Felds auszuwählen.

3. Übertragungsvorrichtung nach einem der Ansprüche 1 und 2, **dadurch gekennzeichnet, dass** die Komprimierungseinrichtungen geeignet sind, um eine Komprimierung auf der Basis mindestens einer Tabelle (5.1) durchzuführen, die vorherbestimmte Werte des ausgewählten Felds oder Feldteils oder der ausgewählten Felder oder Feldteile speichert.

4. Übertragungsvorrichtung nach Anspruch 3, **dadurch gekennzeichnet, dass** sie Einrichtungen zur Aktualisierung der Tabelle oder der Tabellen abhängig von einem Redundanzkriterium, unter einer Gesamtheit von Paketen, von Werten aufweist, die in dem ausgewählten Feld oder Feldteil oder den ausgewählten Feldern oder Feldteilen enthalten sind.

5. Übertragungsvorrichtung nach Anspruch 4, **dadurch gekennzeichnet, dass** sie Einrichtungen zum Zurücksetzen der Tabelle oder der Tabellen aufweist, die bei Ablauf einer Verzögerung oder bei Erfassung einer Inkohärenz mit einer Version der Tabelle oder der Tabellen, die von einer Empfangsvorrichtung (1.52) gespeichert wird, für die die Pakete bestimmt sind, eingesetzt werden.

6. Übertragungsvorrichtung nach einem der Ansprüche 1 bis 5, **dadurch gekennzeichnet, dass** sie Einrichtungen zur Hinzufügung einer Kopfzeile für jedes Paket, die angibt, ob das Paket komprimierte Daten enthält, und Einrichtungen zur Beseitigung der Daten aufweist, die Gegenstand einer Komprimierung durch die Komprimierungseinrichtungen waren, wobei die Beseitigungseinrichtungen für jedes Paket aktiviert werden, dessen hinzugefügte Kopfzeile angibt, dass es komprimierte Daten aufweist.

7. Übertragungsvorrichtung nach einem der Ansprüche 1 bis 6, **dadurch gekennzeichnet, dass** sie eine Zustandsmaschine (6.2) aufweist, wobei jeder Zustand einen aktiven oder inaktiven Status jedes Komprimierungsblocks und für jeden aktiven Komprimierungsblock das Feld oder die Felder oder Feldteil(e) definiert, auf die der Komprimierungsblock angewendet wird.

8. Übertragungsvorrichtung nach Anspruch 7, **dadurch gekennzeichnet, dass** sie Einrichtungen zur Übertragung von Synchronisationsmitteilungen (7.1) aufweist, die einer Empfangsvorrichtung (1.52), für die die Pakete bestimmt sind, eine Zustandsänderung der Zustandsmaschine anzeigen.

9. Übertragungsvorrichtung nach Anspruch 7, **dadurch gekennzeichnet, dass** sie Einrichtungen zum Hinzufügen einer Paketkopfzeile aufweist, die eine für den Zustand repräsentative Angabe aufweist, in dem sich die Zustandsmaschine befindet, oder in dem sich eine entsprechende Zustandsmaschine (8.2) einer Empfangsvorrichtung (1.52) befinden muss, für die die Pakete bestimmt sind.

10. Verfahren, das von einer Vorrichtung (1.51) zur Übertragung von Datenpaketen durchgeführt wird, wobei die Pakete mindestens eine Kopfzeile aufweisen, wobei jede Kopfzeile mindestens ein Datenfeld aufweist, wobei die Vorrichtung Datenkomprimierungseinrichtungen (1.2; 6.3; 6.4; 6.5) aufweist, wobei das Verfahren Schritte (2.2) zur Auswahl eines ganzen oder eines Teils mindestens eines Felds abhängig von einer Information bezüglich mindestens eines der Pakete und zur Komprimierung (2.3) von Daten des ausgewählten Felds oder Feldteils oder der ausgewählten Felder oder Feldteile durch die Komprimierungseinrichtungen aufweist, wobei der Auswahlschritt einen Schritt der statistischen Analyse des Vorhandenseins von Feldwerten in einer Vielzahl von Paketen aufweist, die vorher von der Vorrichtung übertragen wurden,
**dadurch gekennzeichnet, dass** der Schritt der statistischen Analyse einen Schritt der Schätzung einer Übertragungsratenverstärkung für jeden der Feldwerte aufweist,
und dass es einen Schritt der Konfiguration einer Vielzahl von Komprimierungsblöcken (6.3; 6.4; 6.5), wobei jeder Komprimierungsblock geeignet ist, um die Daten eines ganzen oder eines Teils mindestens eines Felds zu komprimieren, und einen Schritt der Aktivierung der Komprimierungsblöcke abhängig von den geschätzten Bandbreitenverstärkungen aufweist.

11. Speichereinrichtungen, **dadurch gekennzeichnet, dass** sie ein Computerprogramm speichern, das Anweisungen zur Durchführung des Verfahrens nach Anspruch 10 durch eine Vorrichtung zur Übertragung von Datenpaketen enthält, wenn das Programm von einem Prozessor der Vorrichtung zur Übertragung von Datenpaketen ausgeführt wird.

12. Computerprogramm, das Anweisungen zur Durchführung des Verfahrens nach Anspruch 10 durch eine Vorrichtung zur Übertragung von Datenpaketen enthält, wenn das Verfahren von einem Prozessor der Vorrichtung zur Übertragung von Datenpaketen ausgeführt wird.

13. Vorrichtung (1.52) zum Empfang von Datenpaketen, wobei jedes Paket mindestens eine Kopfzeile aufweist, wobei jede Kopfzeile mindestens ein Datenfeld aufweist, wobei die Vorrichtung Datendekomprimierungseinrichtungen (1.22) aufweist, **dadurch gekennzeichnet, dass** die Dekomprimierungseinrichtungen eine Vielzahl von Dekomprimierungsblöcken (8.3; 8.4; 8.5) aufweise, wobei jeder Dekomprimierungsblock geeignet ist, um die Daten eines ganzen oder eines Teils mindestens eines Felds zu dekomprimieren, dass die Vorrichtung eine Zustandsmaschine (8.2) aufweist, wobei jeder Zustand einen aktiven oder inaktiven Status jedes Dekomprimierungsblocks, und für jeden aktiven Dekomprimierungsblock das Feld oder die Felder oder den Feldteil oder die Feldteile definiert, auf die der Dekomprimierungsblock angewendet wird, und dass die Vorrichtung Einrichtungen (8.1) zum Empfang von Synchronisationsmitteilungen aufweist, die eine Zustandsänderung anzeigen, die an der Zustandsmaschine anzuwenden ist.

## Claims

1. A data packet transmission device (1.51), each packet comprising at least one header, each header comprising at least one data field, said device comprising data compression means (1.2; 6.3; 6.4; 6.5) and selection means (6.1) capable of selecting all or part of at least one field, as a function of an item of information relating to at least one of said packets, said compression means being capable of compressing the data from said selected field(s) or field part(s), the selection means comprising means for statistical analysis of the presence of field values in a plurality of packets previously transmitted by said device,
**characterised in that** the means for statistical analysis comprise means for estimating a throughput gain for each of said field values,
and **in that** it comprises a plurality of compression blocks (6.3; 6.4; 6.5), each compression block being capable of compressing the data from all or part of at least one field, and **in that** the compression blocks are used as a function of the pass band gains estimated by said estimating means.

2. A transmission device according to claim 1, **characterised in that**, since each packet may comprise a plurality of headers corresponding to respective protocol layers, said selection means are capable of selecting all or part of at least one field from among said plurality of headers.

3. A transmission device according to either one of claims 1 and 2, **characterised in that** the compression means are capable of effecting compression on the basis of at least one table (5.1) storing predetermined values of said selected field(s) or field part (s) .

4. A transmission device according to claim 3, **characterised in that** it comprises means for updating said table(s) as a function of a redundancy criterion, from among an assembly of packets, of values contained in said selected field(s) or field part(s).

5. A transmission device according to claim 4, **characterised in that** it comprises means for reinitialising said table(s), used on expiry of a time delay or on detection of a discrepancy with a version of said table(s) stored by a receive device (1.52) for which the packets are destined.

6. A transmission device according to any one of claims 1 to 5, **characterised in that** it comprises means of adding, for each packet, a header indicating whether said packet comprises compressed data, and means of deleting data which have been compressed by said compression means, said deletion means being enabled for each packet whose added header indicates that it comprises compressed data.

7. A transmission device according to any one of claims 1 to 6, **characterised in that** it comprises a state machine (6.2), each state defining an active or inactive status of each compression block and, for each active compression block, the field(s) or field part(s) to which said compression block applies.

8. A transmission device according to claim 7, **characterised in that** it comprises means of transmitting synchronisation messages (7.1), indicating, to a receive device (1.52) for which the packets are destined, a change in state of said state machine.

9. A transmission device according to claim 7, **characterised in that** it comprises means of adding a packet header comprising an indication representative of the state of said state machine or of a corresponding state machine (8.2) of a receive device (1.52) for which the packets are destined.

10. A method, implemented by a data packet transmission device (1.51), said packets comprising at least one header, each header comprising at least one data field, said device comprising data compression means (1.2; 6.3; 6.4; 6.5), said method comprising steps (2.2) involving selection of all or part of at least one field, as a function of an item of information relating to at least one of said packets, and compression, by said compression means, of the data from said selected field(s) or field part(s), the selection step comprising a step of statistical analysis of the presence of field values in a plurality of packets previously transmitted by said device,
**characterised in that** the statistical analysis step comprises a step involving estimating a throughput gain for each of said field values,
and **in that** it comprises a step of configuring a plurality of compression blocks (6.3; 6.4; 6.5), each compression block being capable of compressing the data of all or part of at least one field, and a step of enabling the compression blocks as a function of the estimated pass band gains.

11. Storage means, **characterised in that** they store a computer program comprising instructions for implementation, by a data packet transmission device, of the method according to claim 10, said program being executed by a processor of the data packet transmission device.

12. A computer program comprising instructions for implementation, by a data packet transmission device, of the method according to claim 10, said program being executed by a processor of the data packet transmission device.

13. A data packet receive device (1.52), each packet comprising at least one header, each header comprising at least one data field, said device comprising data decompression means (1.22), **characterised in that** said decompression means comprise a plurality of decompression blocks (8.3; 8.4; 8.5), each decompression block being capable of decompressing the data from all or part of at least one field, **in that** said device comprises a state machine (8.2), each state defining an active or inactive status for each decompression block and, for each active decompression block, the field(s) or field part(s) to which said decompression block applies, and **in that** said device comprises means (8.1) for receiving synchronisation messages indicating a change of state to be applied to said state machine.
